# EUROPÄISCHE PATENTANMELDUNG

(11) **EP 3 222 921 A1**
(43) Veröffentlichungstag der Anmeldung: **27.09.2017**
(21) Anmeldenummer: 17167957.4
(22) Anmeldetag: 27.02.2015
(51) Int. Cl.: F24D 19/00, F24D 19/10, F16K 3/24, F16K 3/32, F16K 5/10

(54) **HEIZKÖRPERVENTILVORRICHTUNG MIT LANGLOCH**

(30) Priorität: 27.02.2014 DE 102014203548
(62) Teilanmeldung aus: 15156960.5
(71) Anmelder: Alfred Balg GmbH, 50321 Brühl (DE)
(72) Erfinder: Balg, Hans-Alfred, 50321 Brühl (DE)
(74) Vertreter: dompatent von Kreisler Selting Werner - Partnerschaft von Patent- und Rechtsanwälten mbB

(57) **Zusammenfassung**

Heizkörperventilvorrichtung zum Steuern der Durchflussmenge eines Heizmediums von einem Heizungsvorlauf in einen Heizkörper, mit einer mit dem Vorlauf verbindbaren Hülse (24) mit einem sich in Umfangsrichtung erstreckenden Langloch (26) und einem in der Hülse (24) dichtend geführten Kolben (32), dessen Hubbewegung das Langloch (26) öffnet oder schließt, dadurch gekennzeichnet, dass der Kolben (32) um dessen Mittellängsachse (22) drehbar ist und in einem Schließbereich (36) eine derart größere Dicke als in einem Öffnungsbereich (34) aufweist, dass durch Drehen des Kolbens (32) der Schließbereich (36) den Querschnitt des Langloches (26) verändert, um die Durchflussmenge durch die Ventilvorrichtung einzustellen.

## Beschreibung

Die Erfindung betrifft eine Ventilvorrichtung für einen Heizkörper, dem Heizmedium aus einem Heizungsvorlauf zugeführt wird. Nach Durchströmen des Heizkörpers wird das Heizmedium einem Heizungsrücklauf zugeführt.

Die Durchflussmenge von Heizmedium, die aus dem Heizungsvorlauf in den Heizkörper gelangt, wird durch ein Heizungsventil gesteuert. Bei den bekannten Heizungsventilen handelt es sich meist um raumtemperaturabhängig gesteuerte Thermostatventile, die bei Erreichen der gewünschten Raumtemperatur schließen und unterhalb der gewünschten Raumtemperatur automatisch öffnen.

Bei den bekannten Heizungsventilen ist ein Kolben in einem meist rotationssymmetrischen Hohlkörper geführt. Der Kolben ist mit einem thermischen Dehnelement verbunden, das den Kolben bewegt. Dabei ist der Kolben an einem stirnseitigen Ende einer Kolbenstange geführt und wird von dem Dehnelement in Axialrichtung gegen den Rand einer stirnseitigen Öffnung in den Hohlkörper gepresst, um die Öffnung zu verschließen. Dabei strömt das Heizmedium im geöffneten Zustand des Ventils von dem Heizungsvorlauf durch den Hohlkörper und durch die Öffnung in den Heizkörper. Bei Erreichen der gewünschten Raumtemperatur presst das Dehnelement den Kolben gegen die Öffnung, um diese zu verschließen.

Die bekannten Heizungsventile sind mit einer sogenannten KV-Einstellmöglichkeit versehen, die ein Einstellen der maximalen Durchflussmenge im geöffneten Zustand des Ventils ermöglicht. Dabei ist eine Außenhülse und eine an der Innenseite der Außenhülse dichtend geführte Innenhülse vorgesehen. Die Außenhülse weist in ihrer Mantelfläche eine Öffnung auf. Die Innenhülse weist entlang ihres Umfangs mehrere Öffnungen unterschiedlichen Querschnitts auf, die in einer jeweiligen Drehstellung der Innenhülse mit der Öffnung in der Mantelfläche der Außenhülse in Deckung gebracht werden. Je nach Querschnitt der mit der Außenhülsenöffnung in Deckung gebrachten Öffnung der Innenhülse ist eine bestimmte maximale Durchflussmenge im geöffneten Zustand des Heizungsventils vorgegeben. Die KV-Volumenstromeinstellung dient zur Begrenzung des maximal möglichen Volumenstroms.

Die Querschnitte der Innenhülsen-Löcher bekannter Ventileinsätze betragen zum Beispiel 2 mm, 3 mm, 4 mm und 5 mm. Die Öffnungen sind dabei kreisrund ausgebildet. Dabei ergeben sich von einer KV-Einstellung zur nächsten, dass heißt also von einer Rotationsstellung der Innenhülse zur nächsten, Volumensprünge des eingestellten Maximalvolumenstroms im Bereich von 60 Prozent bis 100 Prozent. Diese Volumensprünge ermöglichen nur ein ungenaues Einstellen der Volumenstrombegrenzung. Gerade für moderne Heizungsanlangen mit geringen Vorlauftemperaturen ist eine solche Volumenstrombegrenzung oftmals nicht ausreichend fein.

Der Erfindung liegt die Aufgabe zugrunde, eine Heizkörperventilvorrichtung zu schaffen, die eine verbesserte Volumenstrombegrenzung ermöglicht.

Die erfindungsgemäße Heizkörpervorrichtung ist definiert durch die Merkmale von Anspruch 1. Demnach ist eine mit dem Vorlauf verbindbare Hülse mit einem Langloch versehen, dessen Querschnitt durch die relative Drehstellung eines in der Hülse geführten Kolbens veränderbar ist. Der Kolben erfüllt dabei zwei Funktionen. Zum einen dient der Kolben zum Öffnen und Schließen der Ventilvorrichtung, indem die Hubbewegung des Kolbens in Abhängigkeit von dem thermischen Dehnelement den Kolben entlang der Innenseite der Hülse verschiebt, um das Langloch freizugeben oder zu verschließen. Dies ist die herkömmliche Funktion des Kolbens. Die weitere Funktion des Kolbens besteht in der KV-Volumenstromeinstellung durch Drehen des Kolbens um dessen Mittellängsachse. Dabei ist der Kolben mit einem Öffnungsbereich geringer Dicke und einem Schließbereich größerer Dicke versehen, wobei durch Drehen des Kolbens die Mantelfläche des Schließbereichs entlang der Innenseite der Hülse vor das Langloch bringbar ist, um den Querschnitt des Langlochs durch Drehen des Kolbens zu vergrößern oder zu verringern. Der Kolben weist eine zylindrische Mantelfläche auf, deren Länge dann in dem Schließbereich größer ist, als in dem Öffnungsbereich.

Der Kolben hat beim Ausführen der Hubbewegung eine Öffnungsstellung und eine Schließstellung. In der Öffnungsstellung wird das Langloch je nach Drehstellung des Kolbens freigegeben, um einen Durchfluss zu ermöglichen. In der Schließstellung verschließt der Kolben das Langloch vollständig, unabhängig von der Drehstellung des Kolbens. In der Schließstellung wird das Langloch also immer vollständig verschlossen, während der Öffnungsquerschnitt des Langlochs in der Öffnungsstellung des Kolbens von der Drehstellung des Kolbens abhängt. Der Öffnungsquerschnitt des Langlochs hängt in der Öffnungsstellung des Kolbens also davon ab, welcher Anteil des Langlochs von dem Schließbereich des Kolbens verdeckt ist.

Der Öffnungsbereich und der Schließbereich decken jeweils einen Sektorabschnitt des Kolbens ab. Die beiden Sektorbereiche ergeben zusammen eine Umfangsausdehnung von 360 Grad. Die Umfangsausdehnung des Schließbereichs, das heißt des Bereichs mit der größeren Dicke, entspricht dabei vorteilhafterweise mindestens der Längenerstreckung des Langlochs in Umfangsrichtung der Hülse. Nur dadurch kann der Schließbereich das Langloch in einer geeigneten Drehstellung des Kolbens vollständig verschließen. Vorzugsweise entspricht die Umfangserstreckung des Öffnungsbereichs ebenfalls mindestens der Längenerstreckung des Langlochs in Umfangsrichtung, damit der Öffnungsbereich das Langloch vollständig freigeben kann. Bei einer vorteilhaften Ausgestaltung beträgt die Länge des Langlochs in Umfangsrichtung ungefähr 50 Prozent des Umfangs der Hülse, das heißt das Langloch erstreckt sich etwa über die Hälfte des Hülsenumfangs. In dem Fall sind die Umfangserstreckungen des Schließbereichs und des Öffnungsbereichs gleich und sind jeweils größer oder gleich der Längenerstreckung des Langlochs, um ein vollständiges Verschließen und Freigeben des Langlochs zu ermöglichen.

Das Langloch und der Schließbereich des Kolbens können je nach Drehstellung der Hülse gegenüber dem Kolben in eine unterschiedliche Deckung gebracht werden. Bei maximaler Deckung (Deckungsgrad 100 Prozent) steht der vollständige Querschnitt des Langlochs zum Durchströmen von Heizmedium zur Verfügung. Ein Deckungsgrad von 0 Prozent würde bedeuten, dass der Schließbereich des Kolbens und das Langloch derart gegeneinander verschoben sind, dass keine Öffnung resultiert und kein Heizmedium durch die Hülse hindurch strömen kann. Der Grad der Überdeckung und somit der Volumenstrom ist beliebig einstellbar. Dabei können bestimmte Drehstellungen durch einen Rastmechanismus vorgegeben sein. Zum Beispiel sind 8 Drehstellungen denkbar.

Von Vorteil ist es, wenn die Länge des Langlochs in Umfangsrichtung größer ist, als dessen Breite in Längsrichtung der Hülse. Das Verhältnis der Länge zur Breite des Langlochs sollte mindestens 10 und vorzugsweise mindestens 12 betragen. Desweiteren ist es von Vorteil, wenn die Länge Langlochs mindestens einem Drittel des Umfangs der jeweiligen Hülse und vorzugsweise etwa 40 Prozent bis 60 Prozent (zum Beispiel ungefähr 50 Prozent) des Umfangs entspricht. In diesem Fall sind zum Beispiel bei 8 durch Raststufen vorgegebenen Drehstellungen feinere Abstufungen möglich, als bei den bekannten KV-Feineinstellungen. Zudem sind auch bei geringem Überdeckungsgrad Strömungsgeräusche des Heizmediums reduziert.

Bei einer Variante ist die Hülse mit einer Einströmöffnung und mit einer Ausströmöffnung versehen, wobei die Ausströmöffnung separat verschließbar ist. Das Verschließen der Ausströmöffnung kann z.B. durch eine in der Innenhülse erfolgen, die nach Art einer kV-Einstellhülse drehbar in der Innenhülse geführt ist, um die Ausströmöffnung je nach Drehstellung der Schließhülse zu öffnen oder zu schließen. Der wirksame Querschnitt der Ausströmöffnung kann durch Drehen der Schließhülse ebenfalls verstellt werden, um den durch die Ausströmöffnung gelangenden Volumenstrom einzustellen. Die Schließhülse kann hierzu mit einem Schlüssel zusammengreifen, der ein Einstellen der gewünschten Drehposition der Schließhülse ermöglicht.

Die Innenhülse kann dazu eingesetzt werden, durch Verdrehen der Schließhülse die Menge des in ein wandseitiges Heizelement einströmenden Fluids einzustellen. Das aus dem Langloch ausströmende Fluid strömt dabei in das raumseitige Heizelement und in die Einströmöffnung der Hülse. Im Inneren der Hülse verhindert der in der Hülse geführte Kolben, dass Fluid von dem Langloch durch die Hülse hindurch zu der Einströmöffnung und zu der Ausströmöffnung gelangen kann. Durch entsprechendes Einpassen der Hülse in ein die Hülse umgebendes Gehäuse mit zwei Öffnungen für ein raumseitiges und ein wandseitiges Heizelement eines Heizkörpers kann ermöglicht werden, dass aus dem Langloch ausströmendes Fluid in das raumseitige Heizelement und in die Einströmöffnung gelangt, während aus der Ausströmöffnung strömendes Fluid in das wandseitige Heizelement gelangt. Durch Verstellen des wirksamen Querschnitts der Ausströmöffnung wird damit der in das wandseitige Heizelement gelangende Volumenstrom eingestellt.

Im Folgenden werden anhand der Figuren drei Ausführungsbeispiele der Erfindung näher erläutert. Es zeigen:
- Figur 1: einen Schnitt durch das erste Ausführungsbeispiel,
- Figur 2: eine perspektivische Ansicht des Kolbens des ersten Ausführungsbeispiels,
- Figur 3: eine perspektivische Ansicht des Kolbens des zweiten Ausführungsbeispiels und
- Figur 4: einen Schnitt durch das dritte Ausführungsbeispiel.

Die Heizkörperventilvorrichtung 10 weist ein Gehäuse 12 mit einem Vorlaufanschluss 14 auf, der mit dem Heizungsvorlauf verbunden ist. In dem Gehäuse 12 sind drei Öffnungen 16, 18, 20 ausgebildet. Die erste Gehäuseöffnung 16 ist mit einem in der Figur nicht dargestellten wandseitigen Heizelement des Heizkörpers verbunden. Das aus der Gehäuseöffnung 16 herausströmende Heizmedium wird dem Heizelement in dessen oberem Bereich zugeführt. Durch die Gehäuseöffnung 20 strömt das austretende Heizmedium in ein zweites, raumseitiges Heizelement und wird diesem Heizelement ebenfalls in dessen oberem Bereich zugeführt. Die Gehäuseöffnung 18 ist ebenfalls mit dem zweiten, raumseitigen Heizelement verbunden, nämlich ungefähr auf halber Höhe des Heizelements. Während also das aus der Gehäuseöffnung 20 zugeführte Heizmedium das raumseitige Heizelement vollständig von oben nach unten durchströmt und sich auf halber Höhe bereits entsprechend abgekühlt hat, wird das Heizmedium aus der Gehäuseöffnung 18 dem raumseitigen Heizelement ungefähr auf halber Höhe zugeführt. Dadurch kann auch mit geringer Vorlauftemperatur ein herkömmliches Heizelement über dessen gesamte Höhe gleichmäßig erwärmt werden.

In dem Gehäuse 12 ist eine Hülse 24 vorgesehen. Die Hülse 24 ist Teil eines in das Gehäuse 12 eingeschraubten Ventileinsatzes 27.

Die Hülse 24 ist mit einem Langloch 26 in deren Mantelfläche versehen. Das Langloch 26 ist rechteckförmig. Die Längsrichtung des Langlochs 26 erstreckt sich in Umfangsrichtung der Hülse 24. Die Breitenrichtung des Langlochs 26 erstreckt sich in Längsrichtung der Hülse 24. Die Breite des Langlochs 26 beträgt 1,5 mm und dessen Länge 24 mm.

In der Hülse 24 ist an einer Kolbenstange 30 ein Kolben 32 dichtend an der Innenwand der Hülse 24 geführt. Der Kolben ist mit einem thermischen Dehnelement eines Thermostatfühlers verbunden. Das Dehnelement verschiebt den Kolben 32 in bekannter Weise je nach Raumtemperatur und Einstellung des Thermostatdrehreglers, sodass bei Erreichen einer gewünschten Raumtemperatur der Kolben 32 das Langloch 26 verschließt. Bei Erreichen einer eingestellten Raumtemperatur kann dann kein Heizmedium mehr aus dem Vorlaufanschluss 14 in die Heizelemente gelangen.

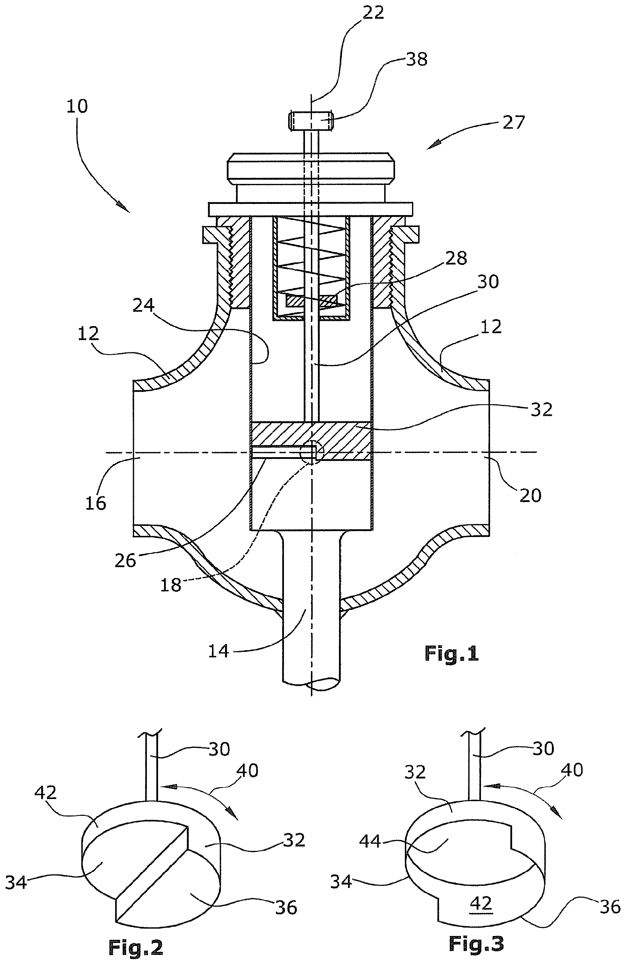

Der Kolben 32 ist in perspektivischer Ansicht in Figur 2 dargestellt. Dort sind der Öffnungsbereich 34 und der Schließbereich 36 des Kolbens 32 erkennbar. Jeder der beiden Bereiche 34, 36 überdeckt die Hälfte der Umfangsrichtung des Kolbens 32, so dass die Bereiche 34, 36 gleich groß sind. In dem Öffnungsbereich 34 weist der Kolben 32 eine geringere Höhe in Längsrichtung parallel zur Mittellängsachse 22 auf, als im Schließbereich 32. Der Kolben 32 ist in der in Figur 2 durch den Pfeil 40 dargestellten Umfangsrichtung rotierbar. Je nach Rotationsstellung des Kolbens verdeckt der Schließbereich 36 zumindest einen Teil des Langlochs 26, wobei der übrige Teil des Langlochs 26 von dem Öffnungsbereich 34 freigegeben wird. Die Höhe des Schließbereichs 34 ist mindestens gleich der Breite des Langlochs 26, damit der Öffnungsbereich 34 in der Schließstellung des Kolbens das Langloch 26 in Abhängigkeit von dem Dehnelement vollständig verschließen kann. Die Hubbewegung des Kolbens 32 ist dabei durch den Anschlag 28 begrenzt. Desweiteren ist es von Vorteil, wenn der Kolben 32 oder die Kolbenstage 30 mit einem in den Figuren nicht dargestellten Rotationsanschlag versehen ist, der die Drehbewegung des Kolbens 32 begrenzt. So ist beispielsweise denkbar, dass der Rotationsanschlag die Drehbewegung stoppt, wenn der Schließbereich 36 das Langloch 26 vollständig verschließt. Durch Drehen des Kolbens 32 kann das Langloch 26 nach und nach geöffnet werden, um einen geeigneten Volumenstrom für den Öffnungszustand des Kolbens 32 einzustellen.

Hierzu ist die Kolbenstange 30 an Ihrem rückwärtigen, dem Kolben 32 gegenüberliegenden Ende mit einem Angriffsteil 38 zum Ansetzen eines Werkzeugs versehen. Mit Hilfe des in den Figuren nicht dargestellten Werkzeugs kann die Kolbenstange gedreht werden. Der Eingriff des Werkzeugs und des Angriffsteils 38 können auf herkömmliche Weise zum Beispiel als gezahnter Eingriff erfolgen. Das Werkzeug und der Ventileinsatz 27 können mit zusammenwirkenden Markierungen, wie zum Beispiel einer Skala versehen sein, um die jeweilige Drehstellung des Kolbens 32 relativ zu dem Langloch 26 anzuzeigen.

Die Hülse 24 ist gegenüber dem Gehäuse 12 derart abgedichtet, dass das Heizmedium durch den Vorlaufanschluss 14 in das Innere der Hülse 24 einströmt. Durch das Langloch 26 strömt das Heizmedium aus der Hülse 24 zu den drei Gehäuseöffnungen 16, 18, 20 und durch diese hindurch in die jeweiligen Heizelemente. Die Gehäuseöffnungen 16, 18, 20 sind von solcher Größe, dass ein jeweils geeigneter Volumenstrom in das jeweilige Heizelement einströmt.

Der Kolben 32 des zweiten Ausführungsbeispiels gemäß Figur 3 ist hohlzylindrisch ausgebildet, wobei der Öffnungsbereich 34 und der Schließbereich 36 in der Mantelfläche 42 des Kolbens 32 ausgebildet sind. Während also der Kolben 32 des ersten Ausführungsbeispiels gemäß den Figuren 1 und 2 massiv ist, ist der Kolben 32 des zweiten Ausführungsbeispiels gemäß Figur 3 hohl. Die bis auf die Abstufungen durch den Öffnungsbereich 34 und den Schließbereich 36 zylindrisch ausgebildete Mantelfläche 42 ist durch eine obere Deckfläche 44 verschlossen. An der oberen Deckfläche 44 ist die Kolbenstange 30 angeordnet. Die in dem Schließbereich 36 größere Dicke des Kolbens 32 gegenüber der Dicke im Öffnungsbereich 34 wird also durch unterschiedliche Längen der Mantelfläche 42 geschaffen. Die Länge der Mantelfläche 42 des Kolbens 32 ist in dem Schließbereich 36 größer als in dem Öffnungsbereich 34.

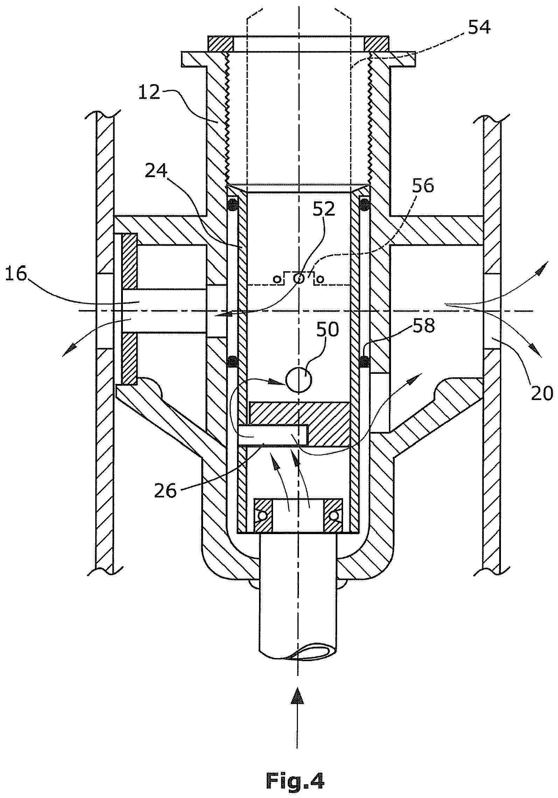

Bei dem in Figur 4 dargestellten dritten Ausführungsbeispiel ist die Hülse 24 zusätzlich mit einer Einströmöffnung 50 und mit einer Ausströmöffnung 52 versehen. In der Hülse 24 ist eine Schließhülse 54 drehbar geführt. Die Schließhülse 54 ist mit einer Aussparung 56 versehen, die es ermöglicht, die Ausströmöffnung 52 in der in Figur 4 dargestellten Drehposition der Schließhülse 54 freizugeben und durch Verdrehen der Schließhülse 54 den wirksamen Querschnitt der Ausströmöffnung 52 zu reduzieren und zu verschließen.

Die Hülse 24 ist, ähnlich wie bei dem ersten Ausführungsbeispiel gemäß Figur 1, in ein die Hülse umgebendes Gehäuse 12 eingesetzt. Zusätzlich ist durch eine geeignete Dichtung 58 verhindert, dass aus dem Langloch 26 ausströmendes Fluid direkt in die erste Öffnung 16 gelangen kann. Das aus dem Langloch 26 ausströmende Fluid strömt vielmehr zu einem Teil in die Einströmöffnung 50 und zu einem anderen Teil in die zweite Öffnung 20 und von dort in ein mit der zweiten Öffnung 20 verbundenes raumseitiges Heizelement. Das durch die Einströmöffnung 50 in die Hülse 24 gelangende Fluid tritt durch die Ausströmöffnung 52 aus der Hülse 24 aus und strömt von dort in die erste Öffnung 16 und in ein mit der ersten Öffnung 16 verbundenes wandseitiges Heizelement. Durch Verdrehen der Schließhülse 54, zum Beispiel mit einem herkömmlichen Schlüssel zur kV-Feineinstellung, kann somit der in das wandseitige Heizelement gelangende Volumenstrom unabhängig von dem in das raumseitige Heizelement gelangende Volumenstrom eingestellt werden. Insbesondere kann durch Verdrehen der Schließhülse 54 die Ausströmöffnung 52 vollständig verschlossen werden, so dass kein Fluid in das wandseitige Heizelement gelangt. Dies kann in der Übergangszeit vorteilhaft sein, um das wandseitige Heizelement vollständig zu sperren und nur über das raumseitige Heizelement zu heizen.

Bei einem weiteren, in den Figuren nicht dargestellten Ausführungsbeispiel ist die Kolbenstange 30 im Bereich ihres rückwärtigen, dem Kolben 32 gegenüberliegenden Endes mit einem Adapter versehen, der mit einem in den Figuren ebenfalls nicht dargestellten Thermostatkopf derart zusammengreifen kann, dass ein Verdrehen des Thermostatkopfes ein entsprechendes Verdrehen der Kolbenstange 30 bewirkt. Der Thermostatkopf kann in bekannter Art und Weise ausgebildet sein, um die Raumsolltemperatur durch Einstellen einer bestimmten Drehposition des Thermostatkopfes vorzugeben. In Abhängigkeit von der Drehposition des Thermostatkopfes wird über entsprechende Verdrehung der Kolbenstange 30 auch der wirksame Öffnungsquerschnitt des Langlochs 26 verändert.

Dem liegt der Gedanke zugrunde, dass zum Erreichen höherer Raumsolltemperaturen ein größerer Volumenstrom des Heizmediums erforderlich ist als für geringere Raumsolltemperaturen. Um beispielsweise eine Raumsolltemperatur von 18 Grad Celsius zu halten ist es ausreichend, einen geringeren Volumenstrom zu wählen, als erforderlich wäre, um eine Raumtemperatur von zum Beispiel 20 Grad Celsius zu halten. Durch den rotatorischen Zusammengriff zwischen der Kolbenstange 30 und dem Thermostatkopf über den Adapter ist somit eine Energieeinsparung möglich.

Der rotatorische Zusammengriff ist derart ausgebildet, dass ein Reduzieren der Raumtemperatur durch entsprechendes Verdrehen des Thermostatkopfes den wirksamen Öffnungsquerschnitt des Langloches 26 und somit den durch das Langloch 26 strömenden Volumenstrom reduziert. Bei Erhöhen der Raumsolltemperatur durch entsprechendes Verdrehen des Thermostatkopfes wird dann automatisch der wirksame Öffnungsquerschnitt des Langloches 26 und der durch das Langloch 26 hindurch strömende Volumenstrom erhöht.

Der Heizungsinstallateur wird zunächst eine geeignete KV-Volumenstromeinstellung durch Drehen des Kolbens zum Beispiel mit Hilfe eines geeigneten Schlüssels vornehmen, die für eine mittlere Raumsolltemperatur von beispielsweise 20 Grad geeignet ist. Durch Verändern der Raumsolltemperatur durch Verdrehen des Thermostatkopfes wird sodann automatisch eine Feineinstellung des Volumenstroms zur Anpassung an die jeweilige Raumsolltemperatur vorgenommen.

## Patentansprüche

1. Heizkörperventilvorrichtung zum Steuern der Durchflussmenge eines Heizmediums von einem Heizungsvorlauf in einen Heizkörper, mit einer mit dem Vorlauf verbindbaren Hülse (24) mit einem sich in Umfangsrichtung erstreckenden Langloch (26) und einem in der Hülse (24) dichtend geführten Kolben (32), dessen Hubbewegung das Langloch (26) öffnet oder schließt, wobei der Kolben (32) um dessen Mittellängsachse (22) drehbar ist und eine zylindrische Mantelfläche (42) aufweist, deren Länge in einem Schließbereich (36) derart größer als in einem Öffnungsbereich (34) ist, dass durch Drehen des Kolbens (32) die Mantelfläche (42) des Schließbereichs (36) den durchströmbaren Querschnitt des Langloches (26) verändert, um die Durchflussmenge durch die Ventilvorrichtung einzustellen,
**dadurch gekennzeichnet,**
**dass** ein die Hülse (24) umgebendes Gehäuse (12) mit mindestens zwei Öffnungen (16, 20) vorgesehen ist, wobei das aus der Hülse (24) ausströmende Heizmedium durch die erste Öffnung (16) in ein erstes Heizelement und durch die zweite Öffnung (20) in ein zweites Heizelement des Heizkörpers einströmt,
**dass** die Hülse (24) zusätzlich mit einer Einströmöffnung (50) und einer Ausströmöffnung (52) versehen ist, wobei die Ausströmöffnung (52) verschließbar ausgebildet ist, und
**dass** die Hülse (24) derart mit dem Gehäuse (12) verbunden ist, dass Fluid aus dem Langloch (26) in die Einströmöffnung (50) und von dort durch die Ausströmöffnung (52) in die erste Öffnung (16) gelangt und dass Fluid aus dem Langloch (26) in die zweite Öffnung (20) gelangt, ohne dass Fluid aus der Ausströmöffnung (52) in die zweite Öffnung (20) gelangen kann.

2. Heizkörperventilvorrichtung nach Anspruch 1, **dadurch gekennzeichnet, dass** die Umfangserstreckung des Schließbereichs (36) mindestens der Längenerstreckung des Langlochs (26) in Umfangsrichtung der Hülse (24) entspricht.

3. Heizkörperventilvorrichtung nach Anspruch 1 oder 2, **dadurch gekennzeichnet, dass** die Längenerstreckung des Langlochs (26) in Umfangsrichtung der Hülse (24) mindestens ein Drittel des Außenumfangs der Hülse (24) überdeckt.

4. Heizkörperventilvorrichtung nach dem vorhergehenden Anspruch, **dadurch gekennzeichnet, dass** die Länge des Langlochs (26) in Umfangsrichtung ungefähr 40 bis 60 Prozent des Umfangs der Hülse (24) beträgt.

5. Heizkörperventilvorrichtung nach einem der vorhergehenden Ansprüche, **dadurch gekennzeichnet, dass** ein die Hubbewegung des Kolbens (32) begrenzender Anschlag (28) vorgesehen ist.

6. Heizkörperventilvorrichtung nach einem der vorhergehenden Ansprüche, **dadurch gekennzeichnet, dass** die Breite des Langlochs (26) in Längsrichtung der Hülse (24) nicht mehr als 3 mm und vorzugsweise etwa 2 mm beträgt.

7. Heizkörperventilvorrichtung nach einem der vorhergehenden Ansprüche, **dadurch gekennzeichnet, dass** die relativen Drehstellungen zwischen der Hülse (24) und dem Schließbereich (36) des Kolbens (32) stufenweise zur Verstellung des Überdeckungsgrades rastend einstellbar sind.

8. Heizkörperventilvorrichtung nach einem der vorhergehenden Ansprüche, **dadurch gekennzeichnet, dass** das rückwärtige, dem Kolben (32) gegenüberliegende Ende der Kolbenstange (30) mit einem Angriffsteil (38) zum Ansetzen eines Werkzeugs zum Verändern der Drehstellung des Kolbens (32) versehen ist.

9. Heizkörperventilvorrichtung nach einem der vorhergehenden Ansprüche, **dadurch gekennzeichnet, dass** durch die relative Drehstellung des Kolbens (32) gegenüber der Hülse (24) die Durchflussmenge des vom Heizungsvorlauf in den Heizkörper gelangenden Heizmediums einstellbar ist.

10. Heizkörperventilvorrichtung nach einem der vorhergehenden Ansprüche, **dadurch gekennzeichnet, dass** in dem Gehäuse (12) eine dritte Öffnung (18) vorgesehen ist, durch die das aus der Hülse (24) ausströmende Heizmedium dem einen Heizelement ungefähr auf halber Höhe des Heizelements zugeführt wird.

11. Heizkörperventilvorrichtung nach einem der vorhergehenden Ansprüche, **dadurch gekennzeichnet, dass** der Kolben (32) hohl ausgebildet ist.

12. Heizkörperventilvorrichtung nach einem der Ansprüche 1 - 10, **dadurch gekennzeichnet, dass** der Kolben (32) massiv ausgebildet ist.

13. Heizkörperventilvorrichtung nach einem der vorhergehenden Ansprüche, **dadurch gekennzeichnet, dass** in der Hülse (24) eine Schließhülse (54) rotatorisch geführt ist, um durch Drehen der Schließhülse (54) die Ausströmöffnung (52) zu öffnen oder zu schließen.

14. Heizkörperventilvorrichtung nach einem der vorhergehenden Ansprüche **dadurch gekennzeichnet, dass** der Kolben (32) einen mit einem Thermostatkopf zur Vorgabe der Raumsolltemperatur zusammen passenden Adapter aufweist, so dass durch Verdrehen des Thermostatkopfes zur Einstellung der Raumsolltemperatur automatisch die Mantelfläche (42) des Schließbereichs (36) den durchströmbaren Querschnitt des Langloches (26) verändert, um die Durchflussmenge durch die Ventilvorrichtung an die eingestellte Raumsolltemperatur anzupassen.
